# EUROPEAN PATENT SPECIFICATION

(11) **EP 4 662 655 B1**
(45) Date of publication and mention of the grant of the patent: **07.10.2026**
(21) Application number: 24863121.0
(22) Date of filing: 29.08.2024
(51) Int. Cl.: G10L 15/22, G10L 15/18, G10L 15/16, G10L 15/06, G06N 3/0895, G06N 3/0455, G06N 3/09, G06F 3/16, G10L 15/183, G10L 15/32

(54) **METHOD AND ELECTRONIC DEVICE FOR RECOGNIZING SPEECH**
VERFAHREN UND ELEKTRONISCHE VORRICHTUNG ZUR SPRACHERKENNUNG
PROCÉDÉ ET DISPOSITIF ÉLECTRONIQUE DE RECONNAISSANCE DE LA PAROLE

(30) Priority: 06.09.2023 US 202363536902 P; 02.04.2024 US 202463573369 P; 23.08.2024 US 202418814275
(43) Date of publication of application: 17.12.2025
(73) Proprietor: Samsung Electronics Co., Ltd., Suwon-si, Gyeonggi-do 16677 (KR)
(72) Inventor: KIM, Euisung, Suwon-si, Gyeonggi-do 16677 (KR); TANG, Yun, Suwon-si, Gyeonggi-do 16677 (KR); KI, Taeyeon, Suwon-si, Gyeonggi-do 16677 (KR); NEELAGIRI, Divya, Suwon-si, Gyeonggi-do 16677 (KR); APSINGEKAR, Vijendra Raj, Suwon-si, Gyeonggi-do 16677 (KR)
(74) Representative: Appleyard Lees IP LLP
(86) International application number: PCT/KR2024/012970
(87) International publication number: WO 2025/053540

(56) References cited:
- KR-A- 20210 042 523
- US-A1- 2020 243 093
- US-A1- 2021 287 656
- US-A1- 2022 067 289
- US-B1- 11 562 735
- PARISA HAGHANI ET AL: "From Audio to Semantics: Approaches to end-to-end spoken language understanding", ARXIV.ORG, CORNELL UNIVERSITY LIBRARY, 201 OLIN LIBRARY CORNELL UNIVERSITY ITHACA, NY 14853, 24 September 2018 (2018-09-24), XP081194763
- ANIRUDH RAJU ET AL: "End-to-End Spoken Language Understanding using RNN-Transducer ASR", ARXIV.ORG, CORNELL UNIVERSITY LIBRARY, 201 OLIN LIBRARY CORNELL UNIVERSITY ITHACA, NY 14853, 30 June 2021 (2021-06-30), XP081996312
- MILIND RAO ET AL: "Speech To Semantics: Improve ASR and NLU Jointly via All-Neural Interfaces", ARXIV.ORG, CORNELL UNIVERSITY LIBRARY, 201 OLIN LIBRARY CORNELL UNIVERSITY ITHACA, NY 14853, 14 August 2020 (2020-08-14), XP081879177, DOI: 10.21437/INTERSPEECH.2020-2976
- YAO QIAN ET AL: "Speech-language Pre-training for End-to-end Spoken Language Understanding", ARXIV.ORG, CORNELL UNIVERSITY LIBRARY, 201 OLIN LIBRARY CORNELL UNIVERSITY ITHACA, NY 14853, 11 February 2021 (2021-02-11), XP081881397

## Description

### Technical Field

This disclosure relates generally to machine learning systems and processes. More specifically, this disclosure relates to joint end-to-end spoken language understanding and automatic speech recognition.

### Background Art

Spoken Language Understanding (SLU) enables the determination of intent and extraction of slot information from spoken language. Traditional SLU systems utilize a cascaded approach, which involves combining Automatic Speech Recognition (ASR) and Natural Language Understanding (NLU) in a sequential manner. ASR generates textual transcripts from users' spoken commands, while NLU extracts semantic information from the transcripts.

Prior art also includes PARISA HAGHANI ET AL: "From Audio to Semantics: Approaches to end to-end spoken language understanding", ARXIV.ORG, CORNELL UNIVERSITY LIBRARY, 201 OLIN LIBRARY CORNELL UNIVERSITY ITHACA, NY 14853, 24 September 2018 (2018-09-24).

Prior art also includes ANIRUDH RAJU ET AL: "End-to-End Spoken Language Understanding using RNN-Transducer ASR", ARXIV.ORG, CORNELL UNIVERSITY LIBRARY, 201 OLIN LIBRARY CORNELL UNIVERSITY ITHACA, NY 14853, 30 June 2021 (2021-06-30).

Prior art also includes MILIND RAO ET AL: "Speech To Semantics: Improve ASR and NLU Jointly via All-Neural Interfaces", ARXIV.ORG, CORNELL UNIVERSITY LIBRARY, 201 OLIN LIBRARY CORNELL UNIVERSITY ITHACA, NY 14853, 14 August 2020 (2020-08-14), DOI: 10.21437/INTERSPEECH.2020-2976.

Prior art also includes YAO QIAN ET AL: "Speech-language Pre-training for End-to-end Spoken Language Understanding", ARXIV.ORG, CORNELL UNIVERSITY LIBRARY, 201 OLIN LIBRARY CORNELL UNIVERSITY ITHACA, NY 14853, 11 February 2021 (2021-02-11).

### Disclosure

### Technical Solution

This disclosure relates to joint end-to-end spoken language understanding and automatic speech recognition.

In an embodiment, a method includes obtaining an utterance. The method includes determining a context associated with the utterance. The method includes providing the utterance as an input to a joint model for automatic speech recognition (ASR) and spoken language understanding (SLU), wherein the joint model operates in a single mode to perform both ASR and SLU or a dual mode to perform one of ASR or SLU depending on the context. The method includes using an output of the joint model to perform an action requested in the utterance.

In an embodiment, an electronic device includes memory and at least one processor. The at least one processor is configured to execute the instructions that cause the electronic device to obtain an utterance. The at least one processor is configured to execute the instructions that cause the electronic device to determine a context associated with the utterance. The at least one processor is configured to execute the instructions that cause the electronic device to provide the utterance as an input to a joint model for automatic speech recognition (ASR) and spoken language understanding (SLU), wherein the joint model operates in a single mode to perform both ASR and SLU or a dual mode to perform one of ASR or SLU depending on the context. The at least one processor is configured to execute the instructions that cause the electronic device to use an output of the joint model to perform an action requested in the utterance.

In an embodiment, a computer readable medium storing instructions, wherein the instructions, when executed by at least one processor, cause the electronic device to perform the method.

Other technical features may be readily apparent to one skilled in the art from the following figures, descriptions, and claims.

### Description of Drawings

For a more complete understanding of this disclosure and its advantages, reference is now made to the following description taken in conjunction with the accompanying drawings, in which like reference numerals represent like parts:
FIGURE 1 illustrates an example network configuration including an electronic device in accordance with this disclosure;
FIGURE 2 illustrates an example joint ASR-SLU system in accordance with this disclosure;
FIGURE 3 illustrates an example joint pre-training process in accordance with this disclosure;
FIGURE 4 illustrates an example joint ASR-SLU model process in accordance with this disclosure;
FIGURE 5 illustrates an example method for joint end-to-end spoken language understanding and automatic speech recognition in accordance with this disclosure; and
FIGURE 6 illustrates an example method for performing continuous conversations in accordance with this disclosure.

### Mode for Invention

Before undertaking the description below, it may be advantageous to set forth definitions of certain words and phrases used throughout this patent document. The terms "transmit," "receive," and "communicate," as well as derivatives thereof, encompass both direct and indirect communication. The terms "include" and "comprise," as well as derivatives thereof, mean inclusion without limitation. The term "or" is inclusive, meaning and/or. The phrase "associated with," as well as derivatives thereof, means to include, be included within, interconnect with, contain, be contained within, connect to or with, couple to or with, be communicable with, cooperate with, interleave, juxtapose, be proximate to, be bound to or with, have, have a property of, have a relationship to or with, or the like.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

As used here, terms and phrases such as "have," "may have," "include," or "may include" a feature (like a number, function, operation, or component such as a part) indicate the existence of the feature and do not exclude the existence of other features. Also, as used here, the phrases "A or B," "at least one of A and/or B," or "one or more of A and/or B" may include all possible combinations of A and B. For example, "A or B," "at least one of A and B," and "at least one of A or B" may indicate all of (1) including at least one A, (2) including at least one B, or (3) including at least one A and at least one B. Further, as used here, the terms "first" and "second" may modify various components regardless of importance and do not limit the components. These terms are only used to distinguish one component from another. For example, a first user device and a second user device may indicate different user devices from each other, regardless of the order or importance of the devices. A first component may be denoted a second component and vice versa.

It will be understood that, when an element (such as a first element) is referred to as being (operatively or communicatively) "coupled with/to" or "connected with/to" another element (such as a second element), it can be coupled or connected with/to the other element directly or via a third element. In contrast, it will be understood that, when an element (such as a first element) is referred to as being "directly coupled with/to" or "directly connected with/to" another element (such as a second element), no other element (such as a third element) intervenes between the element and the other element.

As used here, the phrase "configured (or set) to" may be interchangeably used with the phrases "suitable for," "having the capacity to," "designed to," "adapted to," "made to," or "capable of" depending on the circumstances. The phrase "configured (or set) to" does not essentially mean "specifically designed in hardware to." Rather, the phrase "configured to" may mean that a device can perform an operation together with another device or parts. For example, the phrase "processor configured (or set) to perform A, B, and C" may mean a generic-purpose processor (such as a CPU or application processor) that may perform the operations by executing one or more software programs stored in a memory device or a dedicated processor (such as an embedded processor) for performing the operations.

The terms and phrases as used here are provided to describe some embodiments of this disclosure. It is to be understood that the singular forms "a," "an," and "the" include plural references unless the context clearly dictates otherwise. All terms and phrases, including technical and scientific terms and phrases, used here have the same meanings as commonly understood by one of ordinary skill in the art to which the embodiments of this disclosure belong. It will be further understood that terms and phrases, such as those defined in commonly-used dictionaries, should be interpreted as having a meaning that is consistent with their meaning in the context of the relevant art and will not be interpreted in an idealized or overly formal sense unless expressly so defined here. In some cases, the terms and phrases defined here may be interpreted to exclude embodiments of this disclosure.

Examples of an "electronic device" according to embodiments of this disclosure may include at least one of a smartphone, a tablet personal computer (PC), a mobile phone, a video phone, an e-book reader, a desktop PC, a laptop computer, a netbook computer, a workstation, a personal digital assistant (PDA), a portable multimedia player (PMP), an MP3 player, a mobile medical device, a camera, or a wearable device (such as smart glasses, a head-mounted device (HMD), electronic clothes, an electronic bracelet, an electronic necklace, an electronic accessory, an electronic tattoo, a smart mirror, or a smart watch). Other examples of an electronic device include a smart home appliance. Examples of the smart home appliance may include at least one of a television, a digital video disc (DVD) player, an audio player, a refrigerator, an air conditioner, a cleaner, an oven, a microwave oven, a washer, a dryer, an air cleaner, a set-top box, a home automation control panel, a security control panel, a TV box, a smart speaker or speaker with an integrated digital assistant, a gaming console , an electronic dictionary, an electronic key, a camcorder, or an electronic picture frame. Still other examples of an electronic device include at least one of various medical devices (such as diverse portable medical measuring devices (like a blood sugar measuring device, a heartbeat measuring device, or a body temperature measuring device), a magnetic resource angiography (MRA) device, a magnetic resource imaging (MRI) device, a computed tomography (CT) device, an imaging device, or an ultrasonic device), a navigation device, a global positioning system (GPS) receiver, an event data recorder (EDR), a flight data recorder (FDR), an automotive infotainment device, a sailing electronic device (such as a sailing navigation device or a gyro compass), avionics, security devices, vehicular head units, industrial or home robots, automatic teller machines (ATMs), point of sales (POS) devices, or Internet of Things (loT) devices (such as a bulb, various sensors, electric or gas meter, sprinkler, fire alarm, thermostat, street light, toaster, fitness equipment, hot water tank, heater, or boiler). Other examples of an electronic device include at least one part of a piece of furniture or building/structure, an electronic board, an electronic signature receiving device, a projector, or various measurement devices (such as devices for measuring water, electricity, gas, or electromagnetic waves). Note that, according to various embodiments of this disclosure, an electronic device may be one or a combination of the above-listed devices. According to some embodiments of this disclosure, the electronic device may be a flexible electronic device. The electronic device disclosed here is not limited to the above-listed devices and may include new electronic devices depending on the development of technology.

In the following description, electronic devices are described with reference to the accompanying drawings, according to various embodiments of this disclosure. As used here, the term "user" may denote a human or another device (such as an artificial intelligent electronic device) using the electronic device.

Definitions for other certain words and phrases may be provided throughout this patent document. Those of ordinary skill in the art should understand that in many if not most instances, such definitions apply to prior as well as future uses of such defined words and phrases.

Use of any other term, including without limitation "mechanism," "module," "device," "unit," "component," "element," "member," "apparatus," "machine," "system," "processor," or "controller," within a claim is understood by the Applicant to refer to structures known to those skilled in the relevant art and is not intended to invoke means-plus-function.

In an embodiment of the present disclosure, "context" may refer to all the background information and environmental factors that influence how spoken language is understood and interpreted. For example, context may include linguistic context (e.g. previous utterances, the semantic meaning within the sentence, and the syntactic structure of the language), environmental context (e.g. physical surroundings, like whether the user is speaking in a quiet room or on a noisy street, and the user's location such as GPS location), situational context (e.g. user's intent, the purpose of the conversation, and the tone of voice, which may indicate emotions or specific attitudes), type of application being used, time of day, or device's status (e.g. low battery situation, airplane mode).

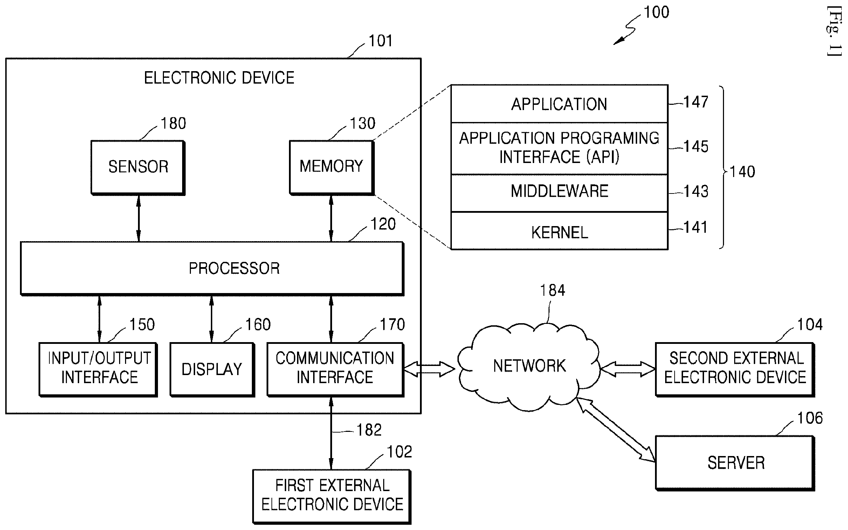

FIGURES 1 through 6, discussed below, and the various embodiments of this disclosure are described with reference to the accompanying drawings. The same or similar reference denotations may be used to refer to the same or similar elements throughout the specification and the drawings.

As noted above, Spoken Language Understanding (SLU) enables the determination of intent and extraction of slot information from spoken language. Traditional SLU systems utilize a cascaded approach, which involves combining Automatic Speech Recognition (ASR) and Natural Language Understanding (NLU) in a sequential manner. ASR generates textual transcripts from users' spoken commands, while NLU extracts semantic information from the transcripts.

Traditional cascaded SLU systems require additional training phases because they use separate, distinct models for ASR and NLU tasks, leading to increased system complexity and processing times. This separated design necessitates separated training processes when switching between tasks, causing compounded errors due to the cascaded approach. The reliance on the output of the ASR model for the SLU model often results in inaccuracies that degrade the overall system performance.

Although some end-to-end (E2E) SLU approaches have been explored, existing E2E SLU systems exhibit suboptimal performance when compared to traditional cascaded ASR and NLU systems. For example, existing E2E SLU approaches experience challenges with model convergence and multi-step training. Particularly, multi-step supervision and the need for convergence of the model by balancing multi-task losses add complexity and extend the training duration, and also hinders efficient model convergence, leading to suboptimal performance and difficult or complicated optimization processes. Also, existing E2E SLU approaches experience increased computational complexity and latency. Particularly, existing E2E SLU systems often face computational complexity and latency by introducing additional modules on top of ASR model, which results in a slower response time and reduced efficiency, which is particularly problematic for applications requiring real-time interaction. Traditional cascaded and E2E SLU systems also cannot perform dynamic context-based switching.

This disclosure addresses a need for a system that not only combines ASR and NLU more efficiently but also adapts to different needs. The various embodiments of this disclosure provide a unified or joint model that performs both ASR and SLU. The joint model can be trained using a joint-speech-to-text pre-training approach that enhances how the system learns by effectively combining or fusing information from speech and text modalities, and the two related tasks can be optimized concurrently. This approach trains the model how to handle two acoustic and linguistic modalities together. This approach also enhances the model training efficiency and accuracy for ASR and SLU, ensuring improved performance of the model to predict ASR transcript and SLU semantics. In various embodiments, during training of the joint model, a pre-trained model built with speech and text data is fine-tuned for E2E SLU tasks. The model is then jointly optimized with ASR and SLU tasks under two schemes: a single mode scheme and a dual mode scheme.

In an embodiment, the joint model may operate in the single mode, in which the model predicts both ASR and SLU results sequentially. Compared to multi-decoder or complicated E2E SLU models, this single mode E2E SLU framework may simplify the decoding process, eliminating the inefficiencies and unnecessary complexities of previous systems with multiple decoders or complicated E2E SLU models. This may provide a streamlined architecture that facilitates rapid processing and response generation.

In an embodiment, the joint model may operate in the dual mode in which the singular joint model is capable of operating in two modes within a single framework, one for ASR transcription and another for understanding the meaning of the ASR transcription. This dual functionality may allow the system to switch seamlessly to predict ASR transcription or their semantic information, making the joint model more versatile and user-friendly.

In an embodiment, the joint model may be trained to switch seamlessly between the single mode and the dual mode and use case for the task to be performed.

An embodiment of the joint model and methods of this disclosure may achieve improved performance on intent classification, slot-filling, and ASR tasks than existing models. An embodiment of the joint model and methods of this disclosure may be used for a variety of use cases, such as a wakeup-less system in which, instead of requiring a wake-up word to start listening, the joint model may always listen and understand contextual conversations without needing a specific wake-up command, leading to more fluid and natural interactions. An embodiment of the joint model and methods of this disclosure may also be used for continuous conversation systems because SLU enhances systems where the conversation does not end after one command or query, but instead, users can have extended dialogues with a virtual assistant, with the system retaining context throughout the conversation. For example, after asking about the weather in Seoul, a user could follow up with "How about Mountain View California?" without repeating the full context. An embodiment of the joint model and methods of this disclosure may be used in a variety of other use cases as well. In all such applications or uses, an embodiment of the joint model and methods of this disclosure may utilize SLU to bridge the gap between ASR and NLU, making voice interactions more seamless and intuitive.

Note that while some of the embodiments discussed below are described in the context of use in consumer electronic devices (such as smartphones), this is merely one example. It will be understood that the principles of this disclosure may be implemented in any number of other suitable contexts and may use any suitable device or devices. Also note that while some of the embodiments discussed below are described based on the assumption that one device (such as a server) performs training of a machine learning model that is deployed to one or more other devices (such as one or more consumer electronic devices), this is also merely one example. It will be understood that the principles of this disclosure may be implemented using any number of devices, including a single device that both trains and uses a machine learning model. In general, this disclosure is not limited to use with any specific type(s) of device(s).

FIGURE 1 illustrates an example network configuration 100 including an electronic device in accordance with this disclosure. The embodiment of the network configuration 100 shown in FIGURE 1 is for illustration only. Other embodiments of the network configuration 100 could be used.

According to an embodiment of this disclosure, an electronic device 101 is included in the network configuration 100. The electronic device 101 can include at least one of, a processor 120, memory 130, an input/output (I/O) interface 150, a display 160, a communication interface 170, or a sensor 180. In an embodiment, the electronic device 101 may exclude at least one of these components or may add at least one other component.

The processor 120 may include one or more processing devices, such as one or more microprocessors, microcontrollers, digital signal processors (DSPs), application specific integrated circuits (ASICs), or field programmable gate arrays (FPGAs). In an embodiment, the processor 120 may include one or more of a central processing unit (CPU), an application processor (AP), a communication processor (CP), or a graphics processor unit (GPU). The processor 120 is able to perform control on at least one of the other components of the electronic device 101 and/or perform an operation or data processing relating to communication or other functions. As described in more detail below, the processor 120 may perform various operations related to joint end-to-end spoken language understanding and automatic speech recognition and associated model training.

The memory 130 may include a volatile and/or non-volatile memory. For example, the memory 130 may store instructions, commands or data related to at least one other component of the electronic device 101. According to an embodiment of the disclosure, the memory 130 can store software and/or a program 140. The program 140 includes, for example, a kernel 141, middleware 143, an application programming interface (API) 145, and/or an application program (or "application") 147. At least a portion of the kernel 141, middleware 143, or API 145 may be denoted an operating system (OS).

The kernel 141 may control or manage system resources (such as processor 120, or memory 130) used to perform operations or functions implemented in other programs (such as the middleware 143, API 145, or application 147). The kernel 141 may provide an interface that allows the middleware 143, the API 145, or the application 147 to access the individual components of the electronic device 101 to control or manage the system resources. The application 147 may support various functions related to joint end-to-end spoken language understanding and automatic speech recognition and associated model training. These functions may be performed by a single application or by multiple applications that each carries out one or more of these functions. The middleware 143 may function as a relay to allow the API 145 or the application 147 to communicate data with the kernel 141, for instance. A plurality of applications 147 may be provided. The middleware 143 may be able to control work requests received from the applications 147, such as by allocating the priority of using the system resources of the electronic device 101 (like, the processor 120, or the memory 130) to at least one of the plurality of applications 147. The API 145 may be an interface allowing the application 147 to control functions provided from the kernel 141 or the middleware 143. For example, the API 145 may include at least one interface or function (such as a command) for filing control, window control, image processing, or text control.

The I/O interface 150 may serve as an interface that can, for example, transfer commands or data input from a user or other external devices to other component(s) of the electronic device 101. The I/O interface 150 may also output commands or data received from other component(s) of the electronic device 101 to the user or the other external device.

The display 160 may include, for example, a liquid crystal display (LCD), a light emitting diode (LED) display, an organic light emitting diode (OLED) display, a quantum-dot light emitting diode (QLED) display, a microelectromechanical systems (MEMS) display, or an electronic paper display. The display 160 may also be a depth-aware display, such as a multi-focal display. The display 160 may be able to display, for example, various contents (such as text, images, videos, icons, or symbols) to the user. The display 160 may include a touchscreen and may receive, for example, a touch, gesture, proximity, or hovering input using an electronic pen or a body portion of the user.

The communication interface 170, for example, may be able to set up communication between the electronic device 101 and an external electronic device (such as a first external electronic device 102, a second external electronic device 104, or a server 106). For example, the communication interface 170 may be connected with a network 182 or 184 through wireless or wired communication to communicate with the external electronic device. The communication interface 170 can be a wired or wireless transceiver or any other component for transmitting and receiving signals.

The wireless communication is able to use at least one of, for example, WiFi, long term evolution (LTE), long term evolution-advanced (LTE-A), 5th generation wireless system (5G), millimeter-wave or 60 GHz wireless communication, Wireless USB, code division multiple access (CDMA), wideband code division multiple access (WCDMA), universal mobile telecommunication system (UMTS), wireless broadband (WiBro), or global system for mobile communication (GSM), as a communication protocol. The wired connection may include, for example, at least one of a universal serial bus (USB), high definition multimedia interface (HDMI), recommended standard 232 (RS-232), or plain old telephone service (POTS). The network 182 or 184 may include at least one communication network, such as a computer network (like a local area network (LAN) or wide area network (WAN)), Internet, or a telephone network.

The electronic device 101 may further include one or more sensors 180 that can meter a physical quantity or detect an activation state of the electronic device 101 and convert metered or detected information into an electrical signal. For example, one or more sensors 180 may include one or more cameras or other imaging sensors for capturing images of scenes. The sensor(s) 180 may also include one or more buttons for touch input, one or more microphones, a gesture sensor, a gyroscope or gyro sensor, an air pressure sensor, a magnetic sensor or magnetometer, an acceleration sensor or accelerometer, a grip sensor, a proximity sensor, a color sensor (such as an RGB sensor), a bio-physical sensor, a temperature sensor, a humidity sensor, an illumination sensor, an ultraviolet (UV) sensor, an electromyography (EMG) sensor, an electroencephalogram (EEG) sensor, an electrocardiogram (ECG) sensor, an infrared (IR) sensor, an ultrasound sensor, an iris sensor, or a fingerprint sensor. The sensor(s) 180 may further include an inertial measurement unit, which can include one or more accelerometers, gyroscopes, and other components. In addition, the sensor(s) 180 may include a control circuit for controlling at least one of the sensors included here. Any of these sensor(s) 180 may be located within the electronic device 101.

In an embodiment, the first external electronic device 102 or the second external electronic device 104 may be a wearable device or an electronic device-mountable wearable device (such as an HMD). When the electronic device 101 is mounted in the first external electronic device 102 (such as the HMD), the electronic device 101 may communicate with the first external electronic device 102 through the communication interface 170. The electronic device 101 may be directly connected with the first external electronic device 102 to communicate with the first external electronic device 102 without involving with a separate network. The electronic device 101 may also be an augmented reality wearable device, such as eyeglasses, that include one or more imaging sensors.

The first and second external electronic devices 102 and 104 and the server 106 each may be a device of the same or a different type from the electronic device 101. According to an embodiment of this disclosure, the server 106 may include a group of one or more servers. Also, according to an embodiment of this disclosure, all or some of the operations executed on the electronic device 101 may be executed on another or multiple other electronic devices (such as the first external electronic devices 102 and the second external electronic device 104 or server 106). Further, according to an embodiment of this disclosure, when the electronic device 101 perform some function or service automatically or at a request, the electronic device 101, instead of executing the function or service on its own or additionally, can request another device (such as the first external electronic device 102, the second external electronic device104 or server 106) to perform at least some functions associated therewith. The other electronic device (such as the first external electronic device 102,the second external electronic device 104 or server 106) may be able to execute the requested functions or additional functions and transfer a result of the execution to the electronic device 101. The electronic device 101 may provide a requested function or service by processing the received result as it is or additionally. To that end, a cloud computing, distributed computing, or client-server computing technique may be used, for example. While FIGURE 1 shows that the electronic device 101 includes the communication interface 170 to communicate with the external electronic device 104 or server 106 via the network 182 or 184, the electronic device 101 may be independently operated without a separate communication function according to some embodiments of this disclosure.

The server 106 may include the same or similar components 120-180 as the electronic device 101 (or a suitable subset thereof). The server 106 may support to drive the electronic device 101 by performing at least one of operations (or functions) implemented on the electronic device 101. For example, the server 106 may include a processing module or processor that may support the processor 120 implemented in the electronic device 101. As described in more detail below, the server 106 may perform various operations related to joint end-to-end spoken language understanding and automatic speech recognition and associated model training.

Although FIGURE 1 illustrates one example of a network configuration 100 including an electronic device 101, various changes may be made to FIGURE 1. For example, the network configuration 100 could include any number of each component in any suitable arrangement. In general, computing and communication systems come in a wide variety of configurations, such as that shown in FIGURE 1. Also, while FIGURE 1 illustrates one operational environment in which various features disclosed in this patent document can be used, these features could be used in any other suitable system.

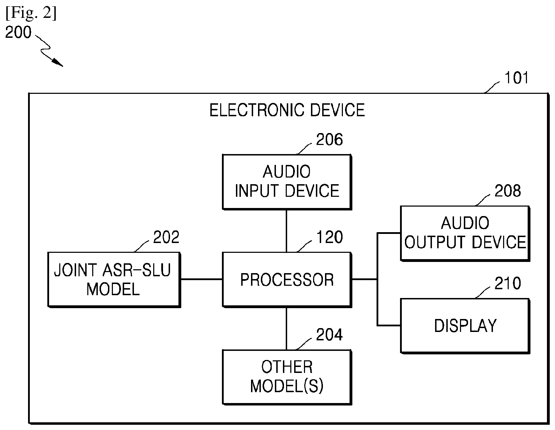

FIGURE 2 illustrates an example joint ASR-SLU system 200 in accordance with the disclosure. For ease of explanation, the system 200 is described as involving the use of the electronic device 101 in the network configuration 100 of FIGURE 1. However, the system 200 may be used with any other suitable device (such as the server 106) or a combination of devices (such as the electronic device 101 and the server 106) and in any other suitable system(s).

As shown in FIGURE 2, the system 200 includes the electronic device 101, which includes the processor 120. The processor 120 may be operatively coupled to or otherwise configured to use one or more machine learning models, such as a joint ASR-SLU model 202. As further described in this disclosure, the joint ASR-SLU model 202 may include various components and sub-models, such as a speech encoder, a shared encoder, and a shared decoder. The joint ASR-SLU model 202 may be trained by training the shared encoder and the shared decoder using a text-to-text task, and, after training the shared encoder and the shared decoder, training the speech encoder and the shared encoder using a speech self-supervised learning (SSL) learning task and a text-to-text task with a masked prediction loss, where the speech and text modalities are connected through supervised learning with phoneme-unit sequence classification criterion and supervised sequential loss with subword tokens. The trained joint ASR-SLU model 202 may receive an utterance as an input, and the joint model 202 can operate in (1) a single mode to perform both ASR and SLU, or (2) a dual mode to perform ASR depending on the context or application. The joint model 202 can generate an output used to perform an action by the electronic device 101 requested in the utterance.

The processor 120 may also be operatively coupled to or otherwise configured to use one or more other models 204, such as other models related to automated speech recognition or voice assistant processes. It will be understood that the machine learning models 202, 204 may be stored in a memory of the electronic device 101 (such as the memory 130) and accessed by the processor 120 to perform automated speech recognition tasks, spoken language understanding tasks, and/or other tasks. However, the machine learning models 202, 204 may be stored in any other suitable manner.

The system 200 may also include an audio input device 206 (such as a microphone), an audio output device 208 (such as a speaker or headphones), and a display 210 (such as a screen or a monitor like the display 160). The processor 120 may receive(e.g. obtain, get) an audio input from the audio input device 206 and provide the audio input to the trained joint ASR-SLU model 202. The trained joint ASR-SLU model 202 may process the audio input and output a result to the processor 120, such as one or more slot-filled data structures and/or intents associated with the audio input. The processor 120 may instruct one or more further actions that correspond to one or more instructions or requests provided in the utterance.

As an example, assume an utterance is received from a user via the audio input device 206 including a command (such as "call mom"). Here, the trained joint ASR-SLU model 202 may be used to recognize the command to be performed using either the single mode or the dual mode. Based on the output of the joint ASR-SLU model 202, the processor 120 may instruct the audio output device 208 to output "calling Mom." The processor 120 may also cause a phone application or other communication application to begin a communication session with a "mom" contact stored on the electronic device 101 or otherwise in association with the user of the electronic device 101. As an example, suppose an utterance of "start a timer" is received. The trained joint ASR-SLU model 202 may process the utterance and provide an output that the processor 120 uses to instruct execution of a timer application and display of a timer on the display 210 of the electronic device 101.

Although FIGURE 2 illustrates one example of a joint ASR-SLU system 200, various changes may be made to FIGURE 2. For example, in an embodiment, the audio input device 206, the audio output device 208, and the display 210 may be connected to the processor 120 within the electronic device 101, such as via wired connections or circuitry. In an embodiment, the audio input device 206, the audio output device 208, and the display 210 may be external to the electronic device 101 and connected via wired or wireless connections. Also, in an embodiment, the joint ASR-SLU model 202 and one or more of the other machine learning models 204 may be stored as separate models called upon by the processor 120 to perform certain tasks or may be included in and form a part of one or more larger machine learning models. Further, in an embodiment, one or more of the machine learning models, such as the joint ASR-SLU model 202 and/or one or more of the other machine learning models 204, may be stored remotely from the electronic device 101, such as on the server 106. Here, the electronic device 101 may transmit requests including inputs (such as captured audio data) to the server 106 for processing of the inputs using the machine learning models, and the results may be sent back to the electronic device 101. In addition, in an embodiment, the electronic device 101 may be replaced by the server 106, which receives audio inputs from a client device and transmits instructions back to the client device to execute functions associated with instructions included in utterances.

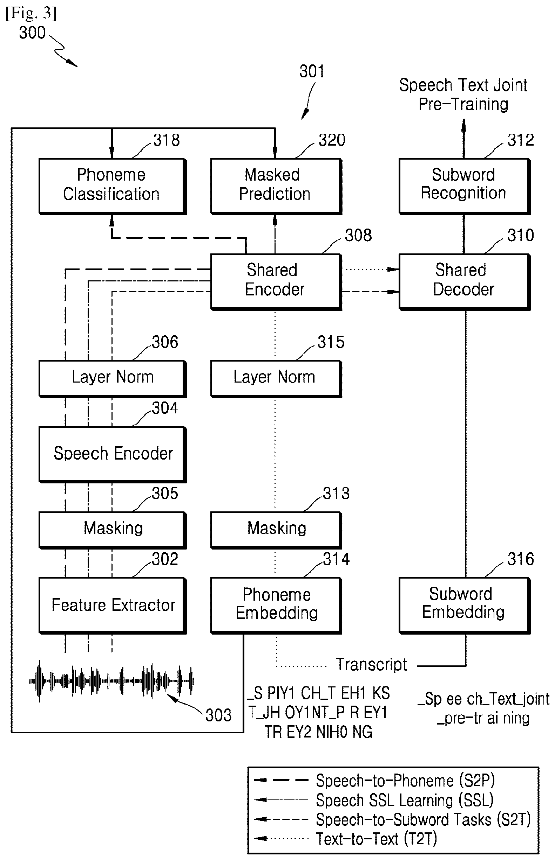

FIGURE 3 illustrates an example joint pre-training process 300 in accordance with this disclosure. For ease of explanation, the process 300 is described as involving the use of the electronic device 101 in the network configuration 100 of FIGURE 1. However, the process 300 may be used with any other suitable electronic device (such as the server 106) or a combination of devices (such as the electronic device 101 and the server 106) and in any other suitable system(s).

As shown in FIGURE 3, the process 300 includes training a joint ASR-SLU model 301, such as the joint ASR-SLU model 202 described with respect to FIGURE 2. In an embodiment, the joint model 301 may be based on an attention-based encoder-decoder (AED) model. The joint model 301 may include a feature extractor 302, a speech encoder 304, a first layer normalization operation 306, a shared encoder 308, and a shared decoder 310. As shown in FIGURE 3, training the joint model 301 may involve a joint speech-to-text pre-training (STPT) phase. The STPT phase may integrate self-supervised and supervised pre-training tasks, including text-to-text (T2T), speech self-supervised learning (SSL), speech-to-phoneme (S2P), and speech-to-subword/speech-to-text tasks (S2T) to learn acoustic and linguistic representations. The STPT phase may include training the joint model 301 using a two-step process.

As shown in FIGURE 3, the overall operation of the joint model 301 includes using the feature extractor 302 to extract features from an audio input 303. These features may be processed by a first masking operation 305 for use by the speech encoder 304. The spoken signal is input to the speech encoder 304, which encodes the speech signals for use by the shared encoder 308, followed by the first layer normalization operation 306 and the shared encoder 308. In an embodiment, the shared encoder 308 may be a transformer and a conformer, which is a combination of a convolutional neural network (CNN) and a multi-head self-attention-based transformer. The shared encoder 308 may be used to provide acoustic representations of audio input data. In an embodiment, a filter-bank feature may be used from the feature extractor 302, such that the shared encoder 308 may map an input filter bank feature sequence to the acoustic representation.

The shared decoder 310 may be an attention-based decoder, and may receive one or more of any previous tokens generated by the model. For example, the shared decoder 310, using outputs from the shared encoder 308, may generate subword outputs with previously generated tokens from the shared decoder 310 auto-regressively. The subword outputs may be used by a subword recognition operation 312. The subword recognition operation 312, in the training phase, can be a softmax function to calculate a probability distribution from the output of the shared decoder. The subword recognition operation 312, in the inference phase, may be greedy search decoding or beam search decoding function. For example, greedy search decoding may include calculating a probability distribution using a softmax function and then selecting the subword token with the maximum probability at each step.

As noted above, the process 300 may include a two-step training process. In a first step, the shared encoder 308 and the shared decoder 310 may be trained using a text-to-text self-supervised loss (*L_{T2T}*) loss so that, initially, the shared encoder and decoder learn the linguistic aspects of the text through the T2T self-supervised loss. The T2T self-supervised loss may be computed using a cross entropy loss, with the target text sequence and its corresponding masked phoneme sequence as inputs. In this step, the phoneme embedding operation 314 may generate phoneme embeddings from the text sequence, while masking operation 313 may produce a corrupted version of the text sequence. This is illustrated in FIGURE 3 as a dotted line. As shown in FIGURE 3, the shared encoder 308 outputs the acoustic representations to both the shared decoder 310, and to a phoneme embedding operation 314, through second masking operation 313 and the second layer normalization operation 315. The phoneme embedding operation 314 may provide subword embeddings 316, which are provided to the shared decoder 310 and used by the shared decoder 310 in generating the subword outputs.

In a second training step, the model is trained on all four tasks: text-to-text (T2T), speech self-supervised learning (SSL) (shown as a dot-dash line in FIGURE 3), speech-to-phoneme (S2P) (shown as a long-dash line in FIGURE 3), and speech-to-subword tasks (S2T) (shown as a short-dash line in FIGURE 3). In an embodiment, the speech encoder 304 and the shared encoder 308 are updated during this second step to acquire sufficient acoustic and linguistic representations while training the model through SSL and T2T with masked prediction loss (*L_{SSL}*). The masked prediction loss (*L_{SSL}*) may be computed by minimizing the Kullback-Leibler divergence between masked speech feature spans, produced by the Feature Extractor 302, and the corresponding context encoder output from the Speech Encoder 304. Two modalities may be connected through supervised learning with phoneme-unit sequence classification criterion (*L_{S2P}*) and supervised sequential loss (*L_{S2T}*) with subword tokens. The speech-to-phoneme loss (*L_{S2P}*) may be optimized with the cross entropy loss with the shared encoder 308 output and the corresponding ground truth phoneme labels provided by phoneme embedding 314.

Speech-to-subword loss (*L_{S2T}*) may be calculated using cross entropy criterion with output of shared decoder 310 and sub-word token sequence units. The final joint pre-training loss used during training can be expressed as follows. ${L}_{TOT} = {L}_{T 2 T} + {L}_{SSL} + {L}_{S 2 P} + {L}_{S 2 T}$

When the joint pre-training loss calculated by the loss function is larger than desired, the parameters of the joint model 301 may be adjusted. Once adjusted, the same or additional training data may be provided to the joint model 301, and additional outputs from the joint model 301 model may be compared to ground truths so that additional losses can be determined using the loss function. In an embodiment, over time, the joint model 301 may produce more accurate outputs that more closely match the ground truths, and the measured loss becomes less. At some point, the measured loss may drop below a specified threshold, and the pre-training of the joint model 301 may be completed.

Although FIGURE 3 illustrates one example of a joint pre-training process 300, various changes may be made to FIGURE 3. For example, various components and functions in FIGURE 3 may be combined, further subdivided, replicated, or rearranged according to particular needs. Also, one or more additional components and functions may be included if needed or desired.

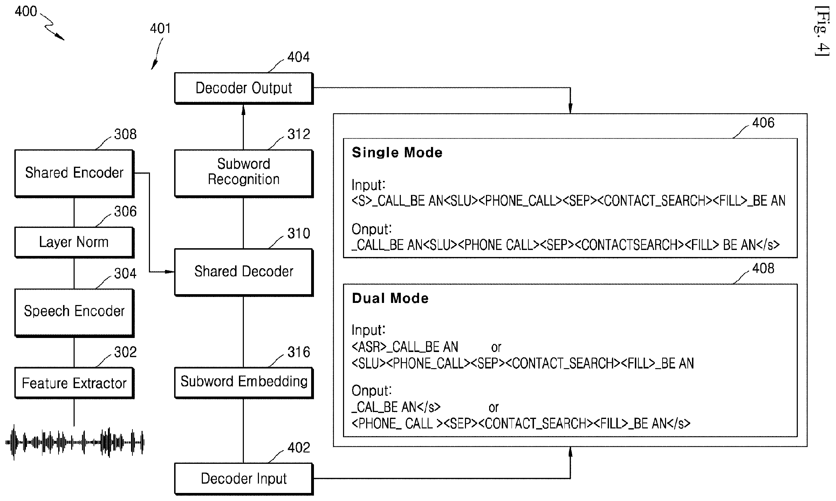

FIGURE 4 illustrates an example joint ASR-SLU model process 400 in accordance with this disclosure. For ease of explanation, the process 400 is described as involving the use of the electronic device 101 in the network configuration 100 of FIGURE 1. However, the process 400 may be used with any other suitable electronic device (such as the server 106) or a combination of devices (such as the electronic device 101 and the server 106) and in any other suitable system(s).

After the joint model is pre-trained via the process 300, the joint model is finetuned via E2E SLU and ASR joint optimization to provide a finetuned joint model 401. The model 401 may estimate sequence posterior probabilities for sub-word outputs (transcript, intent and slots). The joint model 401 may be configured via the finetuning to operate (1) in a single mode and (2) in a dual mode. For example, in an embodiment, the finetuned joint model 401 may be a single mode joint model that retains the simplicity of the model for both of SLU and ASR as well as simultaneously making learning easier by introducing an intermediate transcript representation corresponding to the input audio. In an embodiment, the finetuned joint model 401 may be a dual mode joint model that allows the model to be run by switching ASR or SLU tasks with one well-trained model.

In an embodiment, a single joint model for single and dual modes can be generated(e.g. obtained) via finetuning from the pre-training joint model. In an embodiment, a model may be stored for use and used as needed based on the context. For example, the model for single mode may be associated with certain device applications while the model for dual mode is associated with other device applications. For instance, if a smart speaker without a display screen receives an utterance to play a song, the smart speaker may use the model for dual mode in the SLU mode, since ASR may not be needed as there is no output to display on a screen. Conversely, an electronic device with a display screen that runs a voice assistant conversation application may use the model for single mode because the voice assistant conversation application can use both SLU to determine tasks to be performed, and can use ASR to show an ASR output on the display screen. As an example, a map/navigation application may use both ASR and SLU to display an ASR output pertaining to the navigation request, and use SLU to initiate and perform a navigation task. In an embodiment, the device may only store and/or execute one of the model for single mode or the model for dual mode, such as if the device only uses the model for single mode based on the device only running applications that use both ASR and SLU, or vice versa the device may only store and/or execute the model for dual mode if the device only runs applications that use one of ASR or SLU, and not both.

In an embodiment, for efficiency and to save storage space, the finetuned joint model 401 may be a single model configured to switch between the single mode and the dual mode based on the context. For example, the model could switch to the single mode when an application uses both ASR and SLU, or to the dual mode when the application uses one of ASR or SLU. It will be understood that a same application may also require use of ASR, SLU, or both depending on the application or predefined particular function or device task to be carried out.

As shown in FIGURE 4, the joint model 401 is a backbone model that includes the feature extractor 302, the speech encoder 304, the layer normalization operation 306, the shared encoder 308, and the shared decoder 310 that are also illustrated in FIGURE 3. It will be understood that the joint model 401 may include the other components and/or operations shown in FIGURE 3 as well. As shown in FIGURE 4, the decoder input 402 and the decoder output 404 differ depending on which of the single mode 406 or dual mode 408 is used.

Regarding the single mode 406, the single mode 406 may be used to sequentially generate ASR and SLU results. The ASR and SLU results may be generated with separator tags, such as <SLU>, <FILL>, and <SEP>. The single mode 406 makes learning easier by introducing an intermediate transcript representation corresponding to the input audio and retains the model's simplicity for both SLU and ASR tasks. During finetuning, sequence-to-sequence (seq2seq) training may be used with pairs of the ASR transcript and semantic (intent and slots) sequence and corresponding to a single speech signal as labels. During inferencing, the shared decoder may generate sub-word outputs from the output of the shared encoder 308 with previously generated tokens from the shared decoder 310 in an auto-regressive manner.

Serializing transcript and semantics may be performed by concatenating them with the separator tags <SLU>, <FILL>, <SEP>. For instance, as shown in FIGURE 4, a tokenized transcript may be provided as at least part of the decoder input 402 (e.g., an input including "<S>_CALL_BE AN<SLU><PHONE_CALL><SEP><CONTACT_SEARCH><FILL>_BE AN"). The tokenized transcript may be concatenated to serialized intent and slot keys and values to provide the decoder output 404, which includes the ASR output followed sequentially by the SLU output (e.g., an output including "_CALL_BE AN<SLU><PHONE_CALL><SEP><CONTACT_SEARCH><FILL>_BE AN</s>"). As shown in FIGURE 4, the <SLU> special tag separator may be used as the start of semantics. Also, the serialized semantics are modeled such that the intent argument name may be followed by entity argument name keys and its corresponding tokenized values, separated by separator tokens <SEP> and <FILL>. This approach may provide a straightforward way to extract each semantics and enable the model 401 to learn semantic understanding.

Regarding the dual mode 408, the dual mode 408 may allow the device to seamlessly switch between ASR and SLU tasks based on specific requirements, such as application requirements. The dual mode 408 may help the model achieve a richer representation by encouraging it to match outputs with two distinct but similar underlying information for the same acoustic context representation. During finetuning, an ASR transcript and semantic (intent and slots) sequence may be prepared corresponding to a single speech signal as labels, respectively. Instead of utilizing the required <BOS> symbol for seq2seq training, a special tag indicating <ASR> or <SLU> is prepended at the beginning of each label.

During inferencing, the model may selectively use ASR or SLU by providing indicator tokens as part of the decoder input 402 to the shared decoder 310. For example, as shown in FIGURE 4, an <ASR> token can be provided in the input to indicate the model 401 use ASR (e.g., "<ASR>_CALL_BE AN"), or an <SLU> token can be provided in the input to indicate the model 401 use SLU (e.g., "<SLU><PHONE_CALL><SEP><CONTACT_SEARCH><FILL>_BE AN"). The decoder output 404 of the model 401 when using ASR in the dual mode 408 corresponds to the ASR output (e.g., "_CALL_BE AN</s>"). The decoder output 404 of the model 401 when using SLU in the dual mode 408 corresponds to the SLU task (e.g., "<PHONE_CALL><SEP><CONTACT_SEARCH><FILL>_BE AN</s>").

The joint model may be built to operate a single model in either single or dual mode. During finetuning, an ASR transcript, semantic (intent and slots) sequence, and pair of the ASR transcript and semantic (intent and slots) sequence may be prepared corresponding to a single speech signal as labels, respectively. Instead of utilizing the required <BOS> symbol for seq2seq training, a special tag indicating <DUALASR>, <DUALSLU>, and <SINGLE> is prepended at the beginning of each label. During inferencing, the model can selectively use DUALASR or DUALSLU or SINGLE by providing indicator tokens as part of the decoder input 402 to the shared decoder 310.

Although FIGURE 4 illustrates one example of a joint ASR-SLU model process 400, various changes may be made to FIGURE 4. For example, various components and functions in FIGURE 4 may be combined, further subdivided, replicated, or rearranged according to particular needs. Also, one or more additional components and functions may be included if needed or desired. For instance, in an embodiment, during inferencing using either the single mode or the dual, beam search decoding may be used to determine the final output. Additionally, while shown as a series of operations, various operations in FIGURE 4 could overlap, occur in parallel, occur in a different order, or occur any number of times (including zero times).

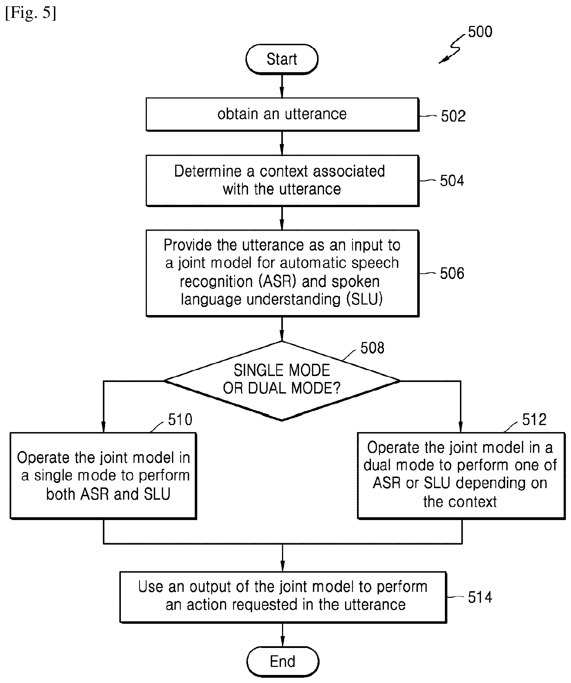

FIGURE 5 illustrates an example method 500 for joint end-to-end spoken language understanding and automatic speech recognition in accordance with this disclosure. For ease of explanation, the method 500 is described as involving the use of the electronic device 101 in the network configuration 100 of FIGURE 1. However, the method 500 may be used with any other suitable electronic device (such as the server 106) or a combination of devices (such as the electronic device 101 and the server 106) and in any other suitable system(s).

At operation 502, an utterance may be received from an audio input device. This may include the processor 120 receiving an audio input via an audio input device, such as audio input device 206. At operation 504, a context associated with the utterance is determined. This may include determining that the utterance is to be used in or by a particular device application, as but one example. At operation 506, the utterance may be provided as an input to a joint model, such as the joint model 202, 301 or 401, for automatic speech recognition (ASR) and spoken language understanding (SLU).

As described in this disclosure, the joint model may include a speech encoder, a shared encoder, and a shared decoder, such as the speech encoder 304, the shared encoder 308, and the shared decoder 310, respectively. As also described in this disclosure, the joint model may further include a layer normalization between the speech encoder and the shared encoder. As also described in this disclosure, the joint model may be trained by training the shared encoder and the shared decoder using a text-to-text task. The speech encoder and the shared encoder may be trained using a speech self-supervised learning (SSL) learning task and a text-to-text task with a masked prediction loss, where speech and text modalities are connected through supervised learning with phoneme-unit sequence classification criterion and supervised sequential loss with subword tokens. This may involve the processor 120 executing the process 300 of FIGURE 3.

In an embodiment as described in this disclosure, the joint model can operate in a single mode to perform both ASR and SLU or a dual mode to perform one of ASR or SLU depending on the context. As described in this disclosure, one joint model can switch between the single mode or dual mode, or separate single mode and dual mode models can be created and used as appropriate. At operation 508, it is determined based on the context whether to use the single mode or the dual mode.

If it is determined to use the single mode, then, at operation 510, the processor can execute the joint model to operate in the single mode to perform both ASR and SLU. As described in this disclosure, in an embodiment, in the single mode the output of the joint model is a tokenized transcript of the utterance concatenated with intent and slot keys and values. If it is determined to use the dual mode, then, at operation 512, the processor can execute the joint model to operate in the dual mode to perform one of ASR or SLU depending on the context. As described in this disclosure, in an embodiment, in the dual mode the input includes an indicator token identifying whether to perform ASR or SLU, and the output of the joint model is a tokenized transcript of the utterance for ASR and intent slot keys and values for SLU. At operation 514, an output of the joint model is used to perform an action requested in the utterance, such as performing a phone call, sending a message, performing a navigation task, etc.

Although FIGURE 5 illustrates one example of a method 500 for joint end-to-end spoken language understanding and automatic speech recognition, various changes may be made to FIGURE 5. For example, while shown as a series of operations, various operations in FIGURE 5 could overlap, occur in parallel, occur in a different order, or occur any number of times (including zero times).

As described in this disclosure, an embodiment of the joint model and methods of this disclosure can be used for a variety of use cases, such as a wakeup-less system in which, instead of requiring a wake-up word to start listening, the joint model can always listen and understand contextual conversations without needing a specific wake-up command, leading to more fluid and natural interactions. An embodiment of the joint model and methods of this disclosure can also be used for continuous conversation systems because SLU enhances systems where the conversation does not end after one command or query, but instead, users can have extended dialogues with a virtual assistant, with the system retaining context throughout the conversation. An embodiment of the joint model and methods of this disclosure can be used in a variety of other use cases as well. In all such applications or uses, an embodiment of the joint model and methods of this disclosure utilizes SLU to bridge the gap between ASR and NLU, making voice interactions more seamless and intuitive.

As an example, an embodiment of the joint model and methods of this disclosure may be used to perform standalone ASR in the dual ASR mode. For instance, for a voice assistant text call or translation or for a voice recorder application, the dual ASR mode described in this disclosure can be used to generate an ASR hypothesis.

As an example, an embodiment of the joint model and methods of this disclosure can be used to operate a voice assistant in an improved wakeupless mode. In related systems, when a wakeupless mode is on (e.g., when an alarm is ringing, a reminder is sounding, or a call ringer is ringing), the microphone may listen to the user's speech (without a wake word) and produce ASR transcriptions. If the transcription matches predefined supported intentions, the appropriate action may be triggered. the various embodiments of the joint model and methods of this disclosure may use the dual/single mode SLU model instead of related ASR-based architectures for the wakeupless mode.

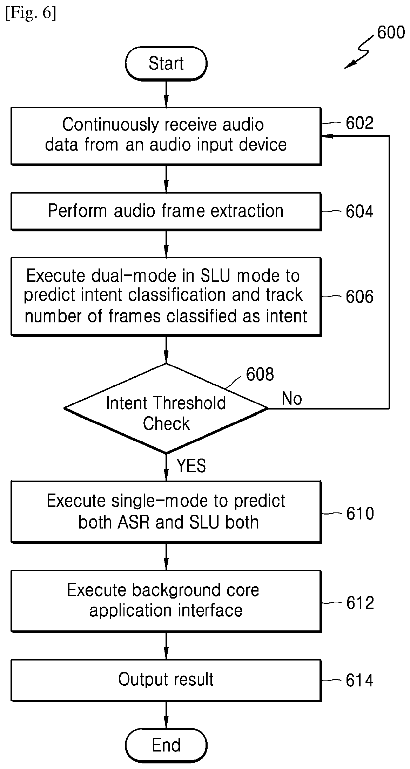

As yet an example, an embodiment of the joint model and methods of this disclosure may be used to provide an always-on voice assistant, that is, a voice assistant capable of performing continuous conversation. FIGURE 6 illustrates an example method 600 for performing continuous conversations in accordance with this disclosure. For ease of explanation, the method 600 is described as involving the use of the electronic device 101 in the network configuration 100 of FIGURE 1. However, the method 600 may be used with any other suitable electronic device (such as the server 106) or a combination of devices (such as the electronic device 101 and the server 106) and in any other suitable system(s).

As shown in FIGURE 6, an example use case for the various embodiments of the joint model and methods of this disclosure is enabling a voice assistant to operate without a voice trigger, which may be referred to as an always-on voice assistant or continuous conversation. For example, the model of this disclosure may classify user intent directly from human spoken utterances based on acoustic information without going through the ASR output. Based on the predicted intent, the voice assistant may proactively provide the necessary information to the user. In an embodiment, after understanding the user's intention by the model, the voice assistant may use the same model to generate ASR information for various additional internal processing. Relatedly, various technical architecture designs based on this disclosure are possible, which are distinguished from the cascaded method of ASR and SLU (intent and NER) in existing approaches.

The continuous conversation architecture may allow the voice assistant to be always on to listen to and participate in conversations or while speaker is talking, and to detect and act on specific intentions or commands. As shown in FIGURE 6, at operation 602, audio data (e.g., spoken utterances) is continuously received from an audio input device, such as a microphone. At operation 604, audio frame extraction is performed on the received audio data. At operation 606, the joint model is operated in the dual-mode in the SLU mode (i.e. execute dual-mode in the SLU mode) so that the model performs dual-mode inference for SLU purposes to output and classify intent on a periodic basis, such as every 10 milliseconds (ms).

The method 600 also may include tracking the number of frames classified as intent, such as by using an intent frame counter process or application. At operation 608, an intent threshold may be checked by comparing the number of tracked intent frames with a threshold N. If, at operation 608, it is determined whether the threshold N is met. If not, the method 600 moves back to operation 602 to receive further audio data from the audio input device, and the dual-mode in the SLU mode is again executed to classify intent. In this way, the inference is always active to ensure real-time intent detection.

If, at operation 608, it is determined that the threshold N is met, the method moves to operation 610. At operation 610, the model may be used in the single-mode to perform inferencing for ASR and SLU purposes to utilize the ASR, intent, and named entity results for executing commands or generating responses. At operation 612, a background core application interface may be executed. The background core application may be used to, or as part of, performing the single mode inferencing at operation 610. At operation 614, a result may be outputted based on the inferencing. The result may be output using the background core application and may trigger the execution of commands, outputting results on a display or via audio output, etc.

Although FIGURE 6 illustrates one example of a method 600 for performing continuous conversations, various changes may be made to FIGURE 6. For example, while shown as a series of operations, various operations in FIGURE 6 could overlap, occur in parallel, occur in a different order, or occur any number of times (including zero times).

It should be noted that the functions shown in FIGURES 2 through 6 or described above can be implemented in an electronic device 101, 102, 104, server 106, or other device(s) in any suitable manner. For example, in some embodiments, at least some of the functions shown in FIGURES 2 through 6 or described above can be implemented or supported using one or more software applications or other software instructions that are executed by the processor 120 of the electronic device 101, 102, 104, server 106, or other device(s). In other embodiments, at least some of the functions shown in FIGURES 2 through 6 or described above can be implemented or supported using dedicated hardware components. In general, the functions shown in FIGURES 2 through 6 or described above can be performed using any suitable hardware or any suitable combination of hardware and software/firmware instructions. Also, the functions shown in FIGURES 2 through 6 or described above can be performed by a single device or by multiple devices.

According to an embodiment of the disclosure, the method includes receiving an utterance from an audio input device. The method includes determining a context associated with the utterance. The method includes providing the utterance as an input to a joint model for automatic speech recognition (ASR) and spoken language understanding (SLU), wherein the joint model operates in a single mode to perform both ASR and SLU or a dual mode to perform one of ASR or SLU depending on the context. The method includes using an output of the joint model to perform an action requested in the utterance.

According to an embodiment of the disclosure, the joint model may include a speech encoder, a shared encoder, and a shared decoder.

According to an embodiment of the disclosure, the joint model may include a layer normalization between the speech encoder and the shared encoder.

According to an embodiment of the disclosure, the joint model may be trained by training the shared encoder and the shared decoder using a text-to-text task.

After training the shared encoder and the shared decoder, the joint model may be trained by training the speech encoder and the shared encoder using a speech self-supervised learning (SSL) learning task and a text-to-text task with a masked prediction loss. Speech and text modalities may be connected through supervised learning with phoneme-unit sequence classification criterion and supervised sequential loss with subword tokens.

The method may include selecting to use the single mode or the dual mode depending on the context.

According to an embodiment of the disclosure, in the single mode, the output of the joint model may be a tokenized transcript of the utterance concatenated with intent and slot keys and values.

According to an embodiment of the disclosure, in the dual mode, the input may include an indicator token identifying whether to perform ASR or SLU, and wherein the output of the joint model is a tokenized transcript of the utterance for ASR and intent slot keys and values for SLU.

According to an embodiment of the disclosure, an electronic device includes memory and at least one processor. The at least one processor is configured to execute the instructions that cause the electronic device to receive an utterance from an audio input device. The at least one processor is configured to execute the instructions that cause the electronic device to determine a context associated with the utterance. The at least one processor is configured to execute the instructions that cause the electronic device to provide the utterance as an input to a joint model for automatic speech recognition (ASR) and spoken language understanding (SLU), wherein the joint model operates in a single mode to perform both ASR and SLU or a dual mode to perform one of ASR or SLU depending on the context. The at least one processor is configured to execute the instructions that cause the electronic device to use an output of the joint model to perform an action requested in the utterance.

According to an embodiment of the disclosure, the shared encoder and the shared decoder may be trained using a text-to-text task. According to an embodiment of the disclosure, after training the shared encoder and the shared decoder, the speech encoder and the shared encoder may be trained using a speech self-supervised learning (SSL) learning task and a text-to-text task with a masked prediction loss. Speech and text modalities may be connected through supervised learning with phoneme-unit sequence classification criterion and supervised sequential loss with subword tokens.

According to an embodiment of the disclosure, the at least one processor may be configured to execute the instructions that cause the electronic device to select to use the single mode or the dual mode depending on the context.

According to an embodiment of the disclosure, in the single mode, the output of the joint model may be a tokenized transcript of the utterance concatenated with intent and slot keys and values.

According to an embodiment of the disclosure, in the dual mode, the input includes an indicator token identifying whether to perform ASR or SLU. The output of the joint model is a tokenized transcript of the utterance for ASR and intent slot keys and values for SLU.

## Claims

1. A method (500) comprising:
obtaining an utterance (502);
determining a context associated with the utterance (504);
providing the utterance as an input to a joint model (202) for automatic speech recognition, "ASR", and spoken language understanding, "SLU", wherein the joint model (202) operates in a single mode to perform both ASR and SLU or a dual mode to perform one of ASR or SLU depending on the context (506); and
using an output of the joint model (202) to perform an action requested in the utterance (514).

2. The method (500) of claim 1, wherein the joint model (202) comprises a speech encoder (304), a shared encoder (306), and a shared decoder (310).

3. The method (500) of any one of claims 1 to 2, wherein the joint model (202) further comprises a layer normalization between the speech encoder (304) and the shared encoder (306).

4. The method (500) of any one of claims 1 to 3, wherein the joint model (202) is trained by:
training the shared encoder (304) and the shared decoder (306) using a text-to-text task; and
after training the shared encoder (304) and the shared decoder (306), training the speech encoder (304) and the shared encoder (306) using a speech self-supervised learning, "SSL", learning task and a text-to-text task with a masked prediction loss,
wherein speech and text modalities are connected through supervised learning with phoneme-unit sequence classification criterion and supervised sequential loss with subword tokens.

5. The method (500) of any one of claims 1 to 4, further comprising,
selecting to use the single mode or the dual mode depending on the context (508).

6. The method (500) of any one of claims 1 to 5, wherein, in the single mode, the output of the joint model (202) is a tokenized transcript of the utterance concatenated with intent and slot keys and values.

7. The method (500) of any one of claims 1 to 6, wherein, in the dual mode, the input includes an indicator token identifying whether to perform ASR or SLU, and wherein the output of the joint model (202) is a tokenized transcript of the utterance for ASR and intent slot keys and values for SLU.

8. An electronic device (101) comprising:
Memory (130) storing instructions;
at least one processor (120) including processing circuitry,
wherein the at least one processor is configured to execute the instructions that cause the electronic device (101) to:
obtain an utterance;
determine a context associated with the utterance;
provide the utterance as an input to a joint model (202) for automatic speech recognition, "ASR", and spoken language understanding, "SLU", wherein the joint model (202) operates in a single mode to perform both ASR and SLU or a dual mode to perform one of ASR or SLU depending on the context; and
use an output of the joint model (202) to perform an action requested in the utterance.

9. The electronic device (101) of claim 8, wherein the joint model (202) comprises a speech encoder (304), a shared encoder (308), and a shared decoder (310).

10. The electronic device (101) of any one of claims 8 to 9, wherein the joint model (202) further comprises a layer normalization between the speech encoder (308) and the shared encoder (308).

11. The electronic device (101) of any one of claims 8 to 10, wherein:
the shared encoder (308) and the shared decoder (310) are trained using a text-to-text task; and
after training the shared encoder (308) and the shared decoder (310), the speech encoder (304) and the shared encoder (308) are trained using a speech self-supervised learning, "SSL", learning task and a text-to-text task with a masked prediction loss,
wherein speech and text modalities are connected through supervised learning with phoneme-unit sequence classification criterion and supervised sequential loss with subword tokens.

12. The electronic device (101) of any one of claims 8 to 11, wherein the at least one processor (120) is configured to execute the instructions that cause the electronic device (101) to select to use the single mode or the dual mode depending on the context.

13. The electronic device (101) of any one of claims 8 to 12, wherein, in the single mode, the output of the joint model (202) is a tokenized transcript of the utterance concatenated with intent and slot keys and values.

14. The electronic device (101) of any one of claims 8 to 13, wherein, in the dual mode, the input includes an indicator token identifying whether to perform ASR or SLU, and wherein the output of the joint model (202) is a tokenized transcript of the utterance for ASR and intent slot keys and values for SLU.

15. A computer-readable storage medium storing instructions, wherein the instructions, when executed by at least one processor, cause the electronic device to perform the method of any one of claims 1 to 7.

## Patentansprüche

1. Verfahren (500), umfassend:
Erhalten einer Äußerung (502);
Bestimmen eines Kontextes assoziiert mit der Äußerung (504);
Bereitstellen der Äußerung als Eingabe in ein gemeinsames Modell (202) zur automatischen Spracherkennung, "ASR", und zum Verständnis gesprochener Sprache, "SLU", wobei das gemeinsame Modell (202) in einem Einzelmodus, um sowohl ASR als auch SLU durchzuführen, oder einem Doppelmodus, um eines von ASR oder SLU abhängig von dem Kontext (506) durchzuführen, arbeitet; und
Verwenden einer Ausgabe des gemeinsamen Modells (202), um eine Handlung durchzuführen, die in der Äußerung (514) angefordert wird.

2. Verfahren (500) nach Anspruch 1, wobei das gemeinsame Modell (202) einen Sprachcodierer (304), einen gemeinsam genutzten Codierer (306) und einen gemeinsam genutzten Decodierer (310) umfasst.

3. Verfahren (500) nach einem der Ansprüche 1 bis 2, wobei das gemeinsame Modell (202) ferner eine Schichtnormalisierung zwischen dem Sprachcodierer (304) und dem gemeinsam genutzten Codierer (306) umfasst.

4. Verfahren (500) nach einem der Ansprüche 1 bis 3, wobei das gemeinsame Modell (202) trainiert wird durch:
Trainieren des gemeinsam genutzten Codierers (304) und des gemeinsam genutzten Decodierers (306) unter Verwendung einer Text-zu-Text-Aufgabe; und
nach dem Trainieren des gemeinsam genutzten Codierers (304) und des gemeinsam genutzten Decodierers (306), Trainieren des Sprachcodierers (304) und des gemeinsam genutzten Codierers (306) unter Verwendung einer Lernaufgabe des sprachselbstüberwachten Lernens, "SSL", und einer Text-zu-Text-Aufgabe mit einem maskierten Vorhersageverlust,
wobei Sprach- und Textmodalitäten durch überwachtes Lernen mit Phonemeinheiten-Sequenzklassifizierungskriterium und überwachten sequenziellen Verlust mit Teilwort-Token verbunden sind.

5. Verfahren (500) nach einem der Ansprüche 1 bis 4, ferner umfassend,
Auswählen, den Einzelmodus oder den Doppelmodus abhängig von dem Kontext (508) zu verwenden.

6. Verfahren (500) nach einem der Ansprüche 1 bis 5, wobei in dem Einzelmodus die Ausgabe des gemeinsamen Modells (202) ein tokenisiertes Transkript der Äußerung ist, die mit Intent- und Slot-Schlüsseln und -Werten verkettet ist.

7. Verfahren (500) nach einem der Ansprüche 1 bis 6, wobei in dem Doppelmodus die Eingabe ein Indikator-Token beinhaltet, das identifiziert, ob ASR oder SLU durchzuführen ist, und wobei die Ausgabe des gemeinsamen Modells (202) ein tokenisiertes Transkript der Äußerung für ASR- und Intent-Slot-Schlüssel und -Werte für SLU ist.

8. Elektronische Vorrichtung (101), umfassend:
Speicher (130), der Anweisungen speichert;
zumindest einen Prozessor (120), der Verarbeitungsschaltung beinhaltet,
wobei der zumindest eine Prozessor dazu konfiguriert ist, die Anweisungen auszuführen, welche die elektronische Vorrichtung (101) zu Folgendem veranlassen:
Erhalten einer Äußerung;
Bestimmen eines Kontextes assoziiert mit der Äußerung;
Bereitstellen der Äußerung als eine Eingabe in ein gemeinsames Modell (202) zur automatischen Spracherkennung, "ASR", und zum Verständnis gesprochener Sprache, "SLU", wobei das gemeinsame Modell (202) in einem Einzelmodus, um sowohl ASR als auch SLU durchzuführen, oder einem Doppelmodus, um eines von ASR oder SLU abhängig von dem Kontext durchzuführen, arbeitet; und
Verwenden einer Ausgabe des gemeinsamen Modells (202), um eine Handlung durchzuführen, die in der Äußerung angefordert wird.

9. Elektronische Vorrichtung (101) nach Anspruch 8, wobei das gemeinsame Modell (202) einen Sprachcodierer (304), einen gemeinsam genutzten Codierer (308) und einen gemeinsam genutzten Decodierer (310) umfasst.

10. Elektronische Vorrichtung (101) nach einem der Ansprüche 8 bis 9, wobei das gemeinsame Modell (202) ferner eine Schichtnormalisierung zwischen dem Sprachcodierer (308) und dem gemeinsam genutzten Codierer (308) umfasst.

11. Elektronische Vorrichtung (101) nach einem der Ansprüche 8 bis 10, wobei:
der gemeinsam genutzte Codierer (308) und der gemeinsam genutzte Decodierer (310) unter Verwendung einer Text-zu-Text-Aufgabe trainiert werden; und
nach dem Trainieren des gemeinsam genutzten Codierers (308) und des gemeinsam genutzten Decodierers (310) der Sprachcodierer (304) und der gemeinsam genutzte Codierer (308) unter Verwendung einer Lernaufgabe des sprachselbstüberwachten Lernens, "SSL" und einer Text-zu-Text-Aufgabe mit einem maskierten Vorhersageverlust trainiert werden,
wobei Sprach- und Textmodalitäten durch überwachtes Lernen mit Phonemeinheiten-Sequenzklassifizierungskriterium und überwachten sequenziellen Verlust mit Teilwort-Token verbunden sind.

12. Elektronische Vorrichtung (101) nach einem der Ansprüche 8 bis 11, wobei der zumindest eine Prozessor (120) dazu konfiguriert ist, die Anweisungen auszuführen, welche die elektronische Vorrichtung (101) dazu veranlassen, abhängig von dem Kontext zu wählen, den Einzelmodus oder den Doppelmodus zu verwenden.

13. Elektronische Vorrichtung (101) nach einem der Ansprüche 8 bis 12, wobei in dem Einzelmodus die Ausgabe des gemeinsamen Modells (202) ein tokenisiertes Transkript der Äußerung ist, die mit Intent- und Slot-Schlüsseln und -Werten verkettet ist.

14. Elektronische Vorrichtung (101) nach einem der Ansprüche 8 bis 13, wobei in dem Doppelmodus die Eingabe ein Indikator-Token beinhaltet, das identifiziert, ob ASR oder SLU durchzuführen ist, und wobei die Ausgabe des gemeinsamen Modells (202) ein tokenisiertes Transkript der Äußerung für ASR- und Intent-Slot-Schlüssel und -Werte für SLU ist.

15. Computerlesbares Speichermedium, das Anweisungen speichert, wobei die Anweisungen, wenn durch zumindest einen Prozessor ausgeführt, die elektronische Vorrichtung dazu veranlassen, das Verfahren nach einem der Ansprüche 1 bis 7 durchzuführen.

## Revendications

1. Procédé (500) comprenant :
l'obtention d'un énoncé (502) ;
la détermination d'un contexte associé à l'énoncé (504) ;
la fourniture de l'énoncé en tant qu'entrée à un modèle commun (202) de reconnaissance vocale automatique, « ASR », et de compréhension du langage parlé, « SLU », dans lequel le modèle commun (202) fonctionne dans un mode simple pour effectuer à la fois l'ASR et la SLU ou dans un mode double pour effectuer l'une de l'ASR ou la SLU en fonction du contexte (506) ; et
l'utilisation d'une sortie du modèle commun (202) pour effectuer une action demandée dans l'énoncé (514).

2. Procédé (500) selon la revendication 1, dans lequel le modèle commun (202) comprend un codeur vocal (304), un codeur partagé (306) et un décodeur partagé (310).

3. Procédé (500) selon l'une quelconque des revendications 1 à 2, dans lequel le modèle commun (202) comprend en outre une normalisation de couche entre le codeur vocal (304) et le codeur partagé (306).

4. Procédé (500) selon l'une quelconque des revendications 1 à 3, dans lequel le modèle commun (202) est entraîné par :
l'entraînement du codeur partagé (304) et du décodeur partagé (306) à l'aide d'une tâche texte à texte ; et
après l'entraînement du codeur partagé (304) et du décodeur partagé (306), l'entraînement du codeur vocal (304) et du codeur partagé (306) en utilisant une tâche d'apprentissage d'apprentissage autosupervisé vocal, « SSL », et une tâche texte à texte avec une perte de prédiction masquée,
dans lequel les modalités de parole et de texte sont connectées par un apprentissage supervisé avec un critère de classification de séquence d'unité de phonème et une perte séquentielle supervisée avec des jetons de sous-mot.

5. Procédé (500) selon l'une quelconque des revendications 1 à 4, comprenant en outre,
le choix d'utiliser le mode simple ou le mode double en fonction du contexte (508).

6. Procédé (500) selon l'une quelconque des revendications 1 à 5, dans lequel, dans le mode simple, la sortie du modèle commun (202) est une transcription tokenisée de l'énoncé concaténé avec des clés et des valeurs d'intention et de slot.

7. Procédé (500) selon l'une quelconque des revendications 1 à 6, dans lequel, dans le mode double, l'entrée comprend un jeton indicateur identifiant s'il faut effectuer l'ASR ou la SLU, et dans lequel la sortie du modèle commun (202) est une transcription tokenisée de l'énoncé pour l'ASR et des clés et valeurs d'intention et de slot pour la SLU.

8. Dispositif électronique (101) comprenant :
une mémoire (130) stockant des instructions ;
au moins un processeur (120) comprenant des circuits de traitement,
dans lequel l'au moins un processeur est configuré pour exécuter les instructions qui amènent le dispositif électronique (101) à :
obtenir un énoncé ;
déterminer un contexte associé à l'énoncé ;
fournir l'énoncé en tant qu'entrée à un modèle commun (202) de reconnaissance vocale automatique, « ASR », et de compréhension du langage parlé, « SLU », dans lequel le modèle commun (202) fonctionne dans un mode simple pour effectuer à la fois l'ASR et la SLU ou dans un mode double pour effectuer l'une de l'ASR ou la SLU en fonction du contexte ; et
utiliser une sortie du modèle commun (202) pour effectuer une action demandée dans l'énoncé.

9. Dispositif électronique (101) selon la revendication 8, dans lequel le modèle commun (202) comprend un codeur vocal (304), un codeur partagé (308) et un décodeur partagé (310).

10. Dispositif électronique (101) selon l'une quelconque des revendications 8 à 9, dans lequel le modèle commun (202) comprend en outre une normalisation de couche entre le codeur vocal (308) et le codeur partagé (308).

11. Dispositif électronique (101) selon l'une quelconque des revendications 8 à 10, dans lequel :
le codeur partagé (308) et le décodeur partagé (310) sont entraînés à l'aide d'une tâche texte à texte ; et
après l'entraînement du codeur partagé (308) et du décodeur partagé (310), le codeur vocal (304) et le codeur partagé (308) sont entraînés en utilisant une tâche d'apprentissage d'apprentissage autosupervisé vocal, « SSL », et une tâche texte à texte avec une perte de prédiction masquée,
dans lequel les modalités de parole et de texte sont connectées par un apprentissage supervisé avec un critère de classification de séquence d'unité de phonème et une perte séquentielle supervisée avec des jetons de sous-mot.

12. Dispositif électronique (101) selon l'une quelconque des revendications 8 à 11, dans lequel l'au moins un processeur (120) est configuré pour exécuter les instructions qui amènent le dispositif électronique (101) à choisir d'utiliser le mode simple ou le mode double en fonction du contexte.

13. Dispositif électronique (101) selon l'une quelconque des revendications 8 à 12, dans lequel, dans le mode simple, la sortie du modèle commun (202) est une transcription tokenisée de l'énoncé concaténé avec des clés et des valeurs d'intention et de slot.

14. Dispositif électronique (101) selon l'une quelconque des revendications 8 à 13, dans lequel, dans le mode double, l'entrée comprend un jeton indicateur identifiant s'il faut effectuer l'ASR ou la SLU, et dans lequel la sortie du modèle commun (202) est une transcription tokenisée de l'énoncé pour l'ASR et des clés et valeurs d'intention et de slot pour la SLU.

15. Support de stockage lisible par ordinateur stockant des instructions, dans lequel les instructions, lorsqu'elles sont exécutées par au moins un processeur, amènent le dispositif électronique à réaliser le procédé de l'une quelconque des revendications 1 à 7.
